# EUROPÄISCHE PATENTSCHRIFT

(11) **EP 0 637 711 B1**
(45) Veröffentlichungstag und Bekanntmachung des Hinweises auf die Patenterteilung: **05.03.1997**
(21) Anmeldenummer: 94110028.1
(22) Anmeldetag: 28.06.1994
(51) Int. Cl.: F16K 21/10, F16K 21/14

(54) **Ventilvorrichtung für fluide Medien**
Valve for fluids
Vanne pour fluides

(30) Priorität: 05.07.1993 DE 4322289
(43) Veröffentlichungstag der Anmeldung: 08.02.1995
(73) Patentinhaber: Schulmeyer, Dieter, D-64572 Büttelborn (DE); NIETHAMMER GmbH, D-64579 Gernsheim (DE)
(72) Erfinder: Schulmeyer, Dieter, D-64572 Büttelborn (DE)
(74) Vertreter: Hoeger, Stellrecht & Partner

(56) Entgegenhaltungen:
- DE-A- 2 908 882
- DE-A- 4 105 166
- FR-A- 2 509 007

## Beschreibung

Die Erfindung betrifft eine Ventilvorrichtung für fluide Medien.

Die Erfindung betrifft neben einer in der Offenstellung selbsthaltenden Ventilvorrichtung insbesondere auch ein Selbstschluß Zeitventil, bei dem die Ventilvorrichtung bei Betätigung dem zu steuernden Medium den Durchfluß freigibt und diesen nach einer gewissen, einstellbaren Zeit selbsttätig unterbricht.

Ferner betrifft die Erfindung eine Ventilvorrichtung als Selbstschluß-Zeitventil, welche vor Ablauf der vorgegebenen Zeit geschlossen werden kann.

Aus der DE-A-41 05 166 ist eine Ventilvorrichtung für fluide Medien bekannt, die eine mit einem von einem Systemdruck beaufschlagten Fluidsystem in Verbindung stehende Einlaßseite, eine Auslaßseite und einen Ventilsitz umfaßt. Die Ventilvorrichtung weist ferner einen von einer Schließstellung in eine Offenstellung bewegbaren Schließkolben auf, der den Ventilsitz der Ventilaufnahme schließt bzw. freigibt und in der letzteren Stellung eine Fließverbindung für das fluide Medium von der Einlaßseite zur Auslaßseite schafft. Der Schließkolben ist mittels eines vom Fluidsystem getrennten, mit einem elastischen Kraftspeicher gekoppelten Hydraulikspeichers betätigbar, wobei der Hydraulikspeicher über eine verformbare Membran mit dem Schließkolben in Wirkverbindung steht. Die Ventilvorrichtung ist als Selbstschluß-Zeitventil ausgebildet und weist hierzu neben dem Hydraulikspeicher ein getrenntes Hydrauliksystem als Zeitsteuervorrichtung auf.

Diese bekannte Ventilvorrichtung umfaßt verhältnismäßig viele, teilweise aufwendig herzustellende Teile.

Demgegenüber stellt sich die vorliegende Erfindung die Aufgabe, die Ventilvorrichtung in ihrer Konstruktion zu vereinfachen, insbesondere die Herstellung der Ventileinzelteile zu vereinfachen und sie so auszulegen, daß sie mit geringem Aufwand als selbsthaltendes Ventil oder als Selbstschluß-Zeitventil ausgestaltet werden kann.

Diese Aufgabe wird durch eine Ventilvorrichtung gemäß Anspruch 1 gelöst.

Bei dieser Konstruktion ist vorgesehen, daß die beiden Flüssigkeitsräume, die ihr Volumen je nach Stellung des Schließkolbens ändern, miteinander durch zwei parallele Fließverbindungen verbunden sind, wobei die erste Fließverbindung ein Rückschlagventil beinhaltet, durch das beim Bewegen des Steuerkolbens und des Schließkolbens in die Offenstellung der Ventilvorrichtung die Hydraulikflüssigkeit im wesentlichen ungehindert vom ersten zum zweiten Flüssigkeitsraum, nicht jedoch umgekehrt strömen kann. Die zweite dazu parallele Fließverbindung ist so ausgelegt, daß hier in der Offenstellung der Ventilvorrichtung, d.h. in der Offenstellung des Schließkolbens, ein Sperrglied eingerückt ist, so daß weder die erste Fließverbindung, die ja durch das Rückschlagventil ein Rückströmen der Flüssigkeit vom zweiten zum ersten Flüssigkeitsraum verhindert, noch die zweite Fließverbindung, die entweder ganz oder doch wesentlich unterbrochen ist, ein ungehindertes Rückströmen der Hydraulikflüssigkeit zulassen.

Will man eine Ventilvorrichtung verwenden, bei dem das Ventil in der Offenstellung selbsthaltend ist, verwendet man ein Sperrglied, das den Rückfluß der Hydraulikflüssigkeit über die zweite Fließverbindung vom zweiten zum ersten Flüssigkeitsraum gänzlich verhindert und dies nur durch gewolltes Auslösen des Sperrgliedes und die Öffnung der zweiten Fließverbindung wieder gestattet, was eine Krafteinwirkung auf eine Handhabe oder ein Betätigungsorgan voraussetzt, oder aber man sieht vor, daß das Sperrglied in definierter Weise einen Rückstrom der Hydraulikflüssigkeit vom zweiten Flüssigkeitsraum zum ersten Flüssigkeitsraum zuläßt, wobei sich dann die Selbstschluß-Zeitventilfunktion der Ventilvorrichtung ergibt.

Bei dieser zweiten Variante der erfindungsgemäßen Ventilvorrichtung ist ebenfalls vorstellbar, daß das Sperrglied wieder bewußt durch externe Krafteinwirkung ausgelöst wird und somit vorzeitig die zweite Fließverbindung freigibt und die Hydraulikflüssigkeit von dem ersten in den zweiten Flüssigkeitsraum strömen läßt, was ein umgehendes vorzeitiges Schließen der Ventilvorrichtung bewirkt.

Eine besonders einfache Konstruktion der Ventilvorrichtung ergibt sich, wenn der Schließkolben und der Steuerkolben koaxial angeordnet sind und beim Betätigen der Ventilvorrichtung gegenläufige Bewegungen ausführen. Dies erlaubt insbesondere eine kompakte Bauweise der Ventilvorrichtung, da hier zumindest für einen Teil der gegenläufigen Bewegungen eine teleskopierende Anordnung von Schließkolben und Steuerkolben vorgesehen werden kann.

Das Sperrglied ist vorzugsweise ein vom Steuerkolben betätigbarer Steuerbolzen, wobei dann die zweite Fließverbindung eine zum Steuerbolzen komplementäre Bohrung umfaßt, in die der Steuerbolzen in der Offenstellung der Ventilvorrichtung einrückt. Vorzugsweise wird der Steuerbolzen vom Steuerkolben gehalten, wobei insbesondere bei koaxialer Anordnung von Schließkolben und Steuerkolben auch der Steuerbolzen koaxial zu den beiden Kolben angeordnet wird.

In diesem Fall ist dann auch die Bohrung der zweiten Fließverbindung koaxial zu Steuerkolben und Steuerbolzen angeordnet, was insgesamt eine sehr kompakte Ventilkonstruktion ergibt.

Vorzugsweise ist die Bohrung im Schließkolben angeordnet, wodurch sich geringste Abmessungen der Ventilvorrichtung erzielen lassen.

Bei einer Variante der Ventilvorrichtung versperrt das Sperrglied, wie bereits oben ausgeführt, die zweite Fließverbindung im wesentlichen vollständig, d.h. nachdem der Steuerkolben in seine Endposition, die der Offenstellung des Schließkolbens entspricht, bewegt ist, verhindert einerseits das Rückschlagventil der ersten Fließverbindung und andererseits das in die zweite Fließverbindung eingerückte Sperrglied ein Rückfließen der Hydraulikflüssigkeit vom zweiten Flüssigkeitsraum in den ersten Flüssigkeitsraum im wesentlichen vollständig. Das Ventil hält damit seine Offenstellung selbst und kehrt in die Schließstellung durch die Wirkung der Schließfeder erst dann zurück, wenn das Sperrglied durch eine gesonderte Krafteinwirkung aus der zweiten Fließverbindung ausgerückt wird.

Bei einer alternativen Ventilvorrichtung, bei der eine Selbstschluß-Zeitfunktion erzielt werden soll, ist vorgesehen, daß das Sperrglied eine Drosselbohrung umfaßt. Hier verhindert das Sperrglied ebenso wie beim zuvor beschriebenen Ventilvorrichtungstyp, daß die Hydraulikflüssigkeit ungehindert vom zweiten zum ersten Flüssigkeitsraum zurückströmen kann, und über die Dimensionierung der Drosselbohrung sowie auch den Einrückweg des Sperrglieds in die zweite Fließverbindung läßt sich die Zeitspanne festlegen, in der das Selbstschluß-Zeitventil offen bleibt. Die Zeitspanne ist selbstverständlich auch von der Viskosität der Hydraulikflüssigkeit, vorzugsweise Silikonöl beeinflußt.

In den Fällen, in denen der Steuerbolzen direkt am Steuerkolben gehalten ist, wird beim Schließen der selbsthaltenden Ventilvorrichtung bzw. beim vorzeitigen Schließen des Selbstschluß-Zeitventils der Steuerbolzen zusammen mit dem Steuerkolben bewegt. Dies ist bei kleindimensionierten Ventilen, wie z.B. für übliche Haushaltswasserzapfstellen, völlig unproblematisch. Bei größer dimensionierten Ventilen, bei denen insbesondere größer dimensionierte Steuerkolben notwendig sind, ist es vorzuziehen, das Sperrglied bzw. den Steuerbolzen unabhängig von der Bewegung des Steuerkolbens aus der zweiten Fließverbindung ausrückbar zu gestalten. Da der Steuerbolzen ein kleineres Volumen beinhaltet als der Steuerkolben, wird beim Ausrücken des Steuerbolzens aus der Bohrung der zweiten Fließverbindung auf seiten des zweiten Flüssigkeitsraumes kurzfristig ein Unterdruck erzeugt, der aufgrund des geringen Volumens des Steuerbolzens nicht so groß ist, daß er für die Handhabung des Ventils problematisch wird.

Bei einer bevorzugten Ausführungsform der Erfindung weist der Schließkolben eine an den Durchmesser des Steuerkolbens angepaßte und mit diesem koaxiale Bohrung auf. Der Steuerbolzen taucht dann bei einer Betätigung der Ventilvorrichtung in diese koaxiale Bohrung ein. Die koaxiale Bohrung des Schließkolbens bildet dabei einen Teil des ersten Flüssigkeitsraumes. Beim Eintauchen des Steuerkolbens in die koaxiale Bohrung des Schließkolbens wird damit der erste Hydraulikraum in einen ersten und einen zweiten Teilraum unterteilt, wobei das erste Teilraumvolumen konstant bleibt, während der zweite Teilraum sein Volumen mit weiterem Eintauchen des Steuerkolbens in den gegenläufig betätigten Schließkolben vermindert. Die Volumenverringerung des zweiten Teilraums des ersten Flüssigkeitsraums entspricht einer Volumenvergrößerung des zweiten Flüssigkeitsraumes, da die entsprechende Hydraulikflüssigkeit von dem Steuerkolben vom zweiten Teilraum des ersten Flüssigkeitsraumes über die erste Fließverbindung mit dem Rückschlagventil in den zweiten Flüssigkeitsraum befördert wird.

Mit der erfindungsgemäßen Ventilvorrichtung läßt sich das Hydrauliksystem im Schließzustand des Schließkolbens im wesentlichen drucklos ausgestalten. Bei der zuvor beschriebenen Variante, bei der der Steuerkolben dichtend an der koaxialen Bohrung des Schließkolbens anliegt und den ersten Flüssigkeitsraum in zwei Teilräume unterteilt, ist der erste Teilraum des ersten Flüssigkeitsraumes während der Öffnungsbewegung des Ventils ebenso wie bei der Schließbewegung drucklos. Dadurch läßt sich die Abdichtung des Hydrauliksystems deutlich vereinfachen. Ferner ist die Gefahr des Verlusts an Hydraulikflüssigkeit des Ventils sehr stark zurückgedrängt, da der Normalzustand des Ventils dessen Schließstellung ist, d.h. das Ventil im Normalzustand drucklos ist.

Das Hydrauliksystem wird vorzugsweise als ein geschlossenes und vollständig gefülltes System ausgeführt werden, wobei dann im ersten Flüssigkeitsraum bzw. im ersten Teilraum des ersten Flüssigkeitsraumes ein Volumenausgleichselement angeordnet ist, welches die von Steuer- und Schließkolben in das Hydrauliksystem bei der Öffnungsbewegung eindringenden Volumenelemente ausgleicht. Das Volumenausgleichselement kann beispielsweise ein geschlossenporiger Polymerschaum sein, wobei aber auch andere Lösungen, wie z.B. ein variables, federbelastetes gleichsvolumen und ähnliches, in Frage kommen.

Diese und weitere Vorteile der Erfindung werden im folgenden anhand der Zeichnung noch näher erläutert. Es zeigen im einzelnen:
- Figur 1: eine Schnittansicht einer erfindungsgemäßen selbsthaltenden Ventilvorrichtung bei geschlossenem Ventil;
- Figur 2: eine Schnittansicht der Ventilvorrichtung der Figur 1 bei geöffnetem Ventil;
- Figur 3: eine Schnittansicht einer erfindungsgemäßen Ventil-vorrichtung als Selbstschluß-Zeitventil im geschlossenen Zustand;
- Figur 4: eine Schnittansicht des Selbstschluß-Zeitventils der Figur 3 in geöffnetem Zustand;
- Figur 5: eine Schnittansicht des Selbstschluß-Zeitventils der Figur 3 beim vorzeitigen Schließen;
- Figur 6: eine alternative Ausführungsform des erfindungsgemäßen Selbstschluß-Zeitventiles in geschlossener Ventilstellung;
- Figur 7: eine Schnittansicht der Ventilvorrichtung der Figur 6 in geöffnetem Zustand des Ventils;
- Figur 8: eine Schnittansicht durch das Selbstschluß-Zeitventil der Figur 6 im Zustand der vorzeitigen Schließung des Ventils.

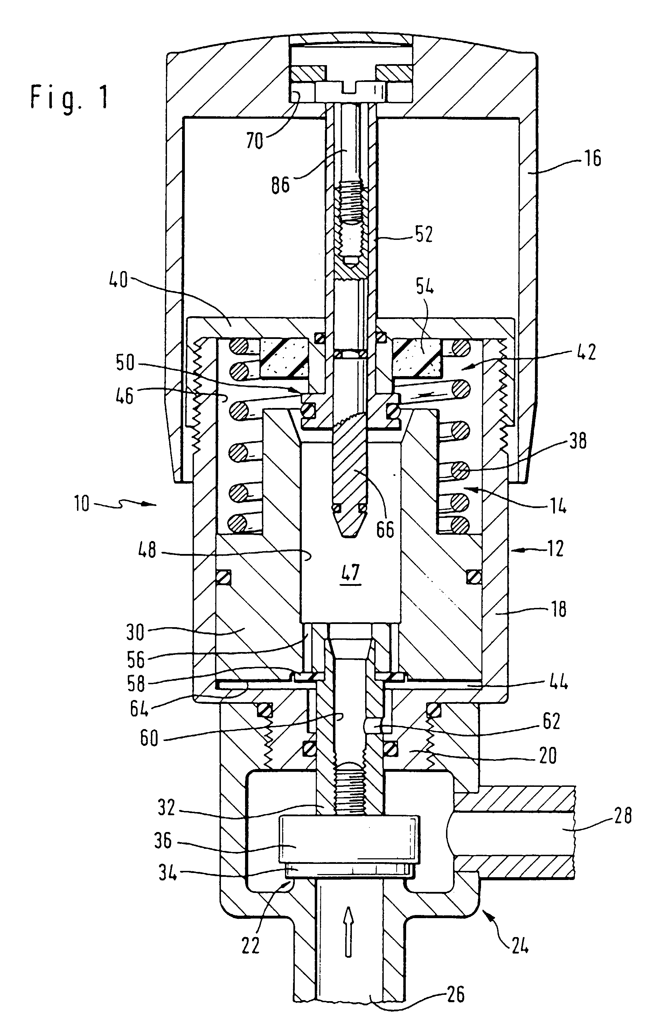

Figur 1 zeigt eine mit dem Bezugszeichen 10 insgesamt bezeichnete Ventilvorrichtung, welche neben einer zylindrischen Ventilaufnahme 12 ein hierin angeordnetes Hydrauliksystem 14 sowie eine Handhabe 16 umfaßt, welche die Ventilaufnahme 12 in Form einer Handhabe oder Abdeckkappe 16 überfängt.

Die Ventilaufnahme 12, die einen im wesentlichen zylindrischen Gehäusekörper 18 aufweist, ist mit ihrem unteren Ende 20 in ein einen Ventilsitz 22 umfassendes, rechtwinkelig abgewinkeltes Rohrstück 24 eingeschraubt. Das Rohrstück 24 definiert stromaufwärts vom Ventilsitz 22 eine Einlaßseite 26 und stromabwärts eine Auslaßseite 28.

Die Ventilvorrichtung umfaßt ferner einen in der Ventilaufnahme 12 angeordneten Schließkolben 30, welcher dichtend an der Innenwandung des zylindrischen Gehäuses 18 anliegt und in diesem längs der Zylinderachse des Gehäuses 18 verschieblich gelagert ist. Der Schließkolben trägt an seinem dem unteren Gehäuseende 20 benachbarten Ende einen Stempel 32, der durch eine Bohrung des unteren Gehäuseendes 20 in das abgewinkelte Rohrstück 24 hineinragt. An seinem unteren, in den Hohlraum des Rohrstücks 24 hineinragenden Ende trägt der Stempel 32 eine Dichtung 34, welche im geschlossenen Zustand der Ventilvorrichtung 10 den Ventilsitz 22 belegt (wie in Figur 1 dargestellt). Die Dichtung 34 wird vorzugsweise von einem Aufnahmeteil 36 gehalten, welches in eine koaxiale Bohrung in das untere Ende des Stempels 32 eingeschraubt ist.

Der Schließkolben 30 wird durch eine ebenfalls im Gehäuse 18 angeordnete Schließfeder 38 in Richtung zum unteren Ende des zylindrischen Gehäuses 18 gedrückt. Dabei stützt sich die Schließfeder 38 an einem über das obere Ende des zylindrischen Gehäuses 18 geschraubten Verschluß 40 ab. Die Federkraft der Schließfeder 38 wird so dimensioniert, daß sie die Dichtung 34 sicher auf dem Ventilsitz 22 gegen den von der Einlaßseite 26 her wirkenden Systemdruck des Fluidsystems preßt. Damit kann das Hydrauliksystem drucklos gestaltet werden.

Das Hydrauliksystem, mit welchem der Schließkolben 30 von seiner in Figur 1 gezeigten Schließstellung in eine Offenstellung bewegt werden kann, beinhaltet einen ersten Flüssigkeitsraum 42, der benachbart zum oberen Ende des zylindrischen Gehäuses 18 angeordnet ist, sowie einen zweiten Flüssigkeitsraum 44, der am unteren Ende des zylindrischen Gehäuses 18 angeordnet ist. Der erste Flüssigkeitsraum 42 besteht dabei im wesentlichen aus zwei Teilräumen, einem ersten Teilraum 46, der im wesentlichen einen Ringraum um den oberen Teil des Schließkolbens 30 zur Wandung des zylindrischen Gehäuses 18 bildet, und einem zweiten Teilraum 47, der im wesentlichen das Volumen einer koaxialen Bohrung 48 im Schließkolben 30 umfaßt.

Das Hydrauliksystem 14 umfaßt ferner einen Steuerkolben 50, welcher mit seiner Kolbenstange 52 durch den Verschluß 40 aus dem Gehäuse 18 herausgeführt ist. Die Kolbenstange 52 ist mit dem Deckel oder der Handhabe 16 verbunden, so daß der Steuerkolben 50 im Gehäuse 18 mit der Handhabe 16 bewegt werden kann. Der Durchmesser des Steuerkolbens 50 entspricht dem Durchmesser der Bohrung 48 im Schließkolben 30, welche im wesentlichen den zweiten Teilraum 47 des ersten Flüssigkeitsraums 42 bildet. Beim Einführen des Steuerkolbens 50 in das Gehäuse 18 rückt dieser in die Bohrung 48 ein und trennt den zunächst zusammenhängenden ersten Flüssigkeitsraum in zwei Teilräume 46 und 47. Bevor der Kolben 50 dichtend an der Wandung der Bohrung 48 des Schließkolbens 30 anliegt, findet lediglich eine geringe Kompression eines Volumenausgleichteils 54 aus geschlossenem Polymerschaum statt, während der Schließkolben 30 in seiner unteren Stellung verharrt. Sobald der Schließkolben 50 dichtend an der Bohrung 48 anliegt, wird Hydraulikflüssigkeit aus dem zweiten Teilraum 47 des ersten Flüssigkeitsraums 42 in den zweiten Flüssigkeitsraum 44 gepreßt.

Der erste Flüssigkeitsraum 42 und der zweite Flüssigkeitsraum 44 stehen miteinander über eine erste Fließverbindung, die Kanäle 56 und ein Rückschlagventil 58 beinhaltet, sowie über eine zweite Fließverbindung, die in Form einer koaxialen Bohrung 60 im Stempel 32 und einer im Stempel 32 angebrachten durchgängigen Querbohrung 62 besteht, in Verbindung. Wenn der Kolben 50 mittels der Handhabe 16 nach unten, d.h. in das Gehäuse 18, hineingedrückt wird, trennt er nach einer kurzen Wegstrecke den ersten Flüssigkeitsraum 42 in den ersten und den zweiten Teilraum 46, 47 und verdrängt nachfolgend die im Teilraum 47 gespeicherte Hydraulikflüssigkeit aus dem zweiten Teilraum 47 des ersten Flüssigkeitsraums 42 über die Kanäle 56 und das Rückschlagventil 58 sowie über die Bohrung 60 und die Querbohrung 62 in den zweiten Flüssigkeitsraum 44. Der jetzt an der Kolbenunterseite 64 des Kolbens 30 aufgebaute Hydraulikdruck bewegt den Schließkolben 30 unter Vergrößerung des Volumens des zweiten Flüssigkeitsraumes 44 im Gehäuse 18 gegen die Kraft der Schließfeder 38 nach oben, wobei gleichzeitig die Dichtung 34 vom Ventilsitz 22 abgehoben und damit die Ventilvorrichtung geöffnet wird. Beim weiteren Einführen des Schließkolbens in die Bohrung 48 belegt ein am Steuerkolben 50 gehaltener Steuerbolzen 66 des Stempels 32 die Bohrung 60, wobei gleichzeitig die zweite Fließverbindung zwischen dem ersten Flüssigkeitsraum 42 und dem zweiten Flüssigkeitsraum 44 unterbrochen wird. Die Hydraulikflüssigkeit strömt nunmehr nur noch über die erste Fließverbindung, d.h. die Verbindungskanäle 56 und das Rückschlagventil 58 vom ersten Flüssigkeitsraum 42 bzw. der Bohrung 48 (zweiter Teilraum 47) zum zweiten Flüssigkeitsraum 44. Das Volumen des ersten Teilraums 46 bleibt dabei konstant, wobei die Volumenanteile der in das Gehäuse eingeführten Kolbenstange 52 durch eine Kompression des Volumenausgleichselements 54 kompensiert werden.

Bei der Öffnungsbewegung des Schließkolbens 30, der im Gehäuse 18 nach oben bewegt wird, findet eine gegenläufige Bewegung des Steuerkolbens 50 statt, der in der Bohrung 48 des Schließkolbens 30 nach unten bewegt wird.

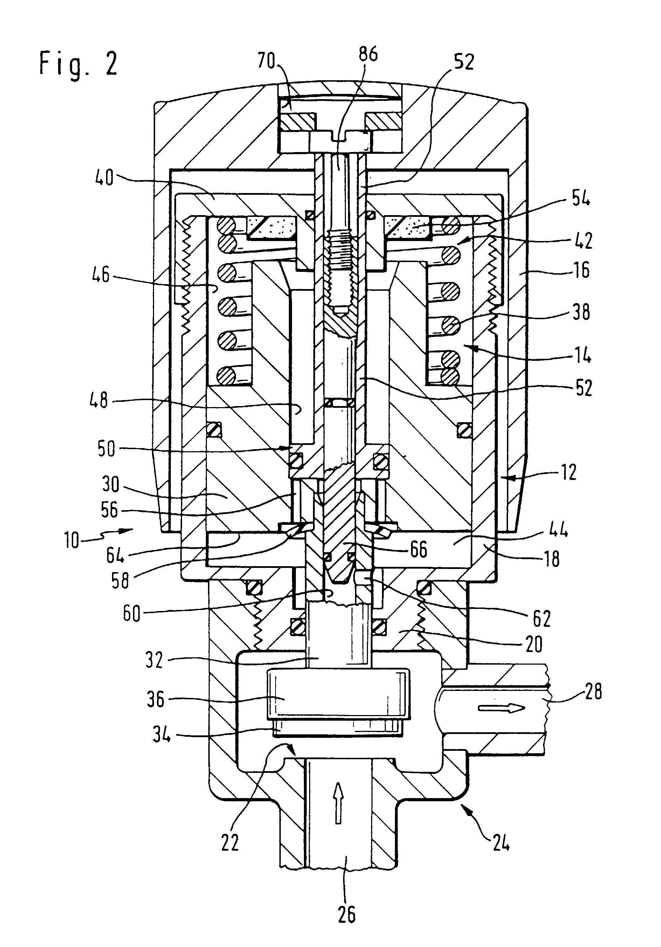

Figur 2 zeigt das Ventil in vollständig geöffnetem Zustand, bei dem die Handhabe 16 im wesentlichen bis zum Anschlag nach unten bewegt ist. Das Rückschlagventil 58, das bei der vorliegenden Ausführungsform von einer Gummischeibe gebildet ist, ist in Figur 2 noch im offenen Zustand gezeichnet, in dem eine Verbindung zwischen dem Verbindungskanal 56, der das Restvolumen des zweiten Teilraums 47 bildet, und dem zweiten Flüssigkeitsraum 44 geschaffen wird. Sobald der maximal mögliche Flüssigkeitsanteil aus dem ersten Teilraum 42 in den zweiten Teilraum 44 geströmt ist, schließt das Rückschlagventil 58 wieder, d.h. die Blattfeder kehrt in die in Figur 1 gezeigte, dichtende Stellung zurück. Da bei dem in den Figuren 1 und 2 gezeigten Steuerbolzen 66 die koaxiale Bohrung 60 vollständig verschlossen und damit die zweite Fließverbindung zwischen erstem und zweitem Flüssigkeitsraum 42, 44 unterbrochen wird und andererseits das Rückschlagventil 58 die erste Fließverbindung zwischen erstem und zweitem Flüssigkeitsraum abdichtet, bleibt der Schließkolben 30 in seiner in Figur 2 gezeigten Stellung trotz der von der Schließfeder 38 ausgeübten, nach unten wirkenden Kraft in seiner der Offenstellung der Ventilvorrichtung 10 entsprechenden Stellung stehen. Erst durch eine Krafteinwirkung auf die Handhabe 16, welche den Steuerkolben 50 zusammen mit dem Steuerbolzen 66 nach oben bewegt, läßt sich das Ventil aus der Offenstellung wieder in die Schließstellung zurückbewegen.

Bei einem Betätigen der Handhabe 16 zum Schließen des Ventils verkleinert sich der zweite Flüssigkeitsraum 44 durch einen sich nach unten bewegenden Schließkolben 30, die Hydraulikflüssigkeit strömt über die Querbohrung 62 in die koaxiale Bohrung 60 ein. Das Volumen des ersten Teilraums 46 des ersten Flüssigkeitsraums 42 bleibt im wesentlichen konstant, da die von dem nach oben bewegten Steuerkolben 50 verdrängte Hydraulikflüssigkeit von dem sich nach unten bewegenden Steuerkolben 30 vergrößernden Ringraum des ersten Flüssigkeitsraums 42 aufgenommen wird. In dem zweiten Teilraum 47 entsteht, da keine Fließverbindung zum zweiten Flüssigkeitsraum 44 besteht, für kurze Zeit ein Unterdruck. Dieser wird aufgehoben, sobald der Steuerbolzen 66 die koaxiale Bohrung 60 verläßt und damit wieder eine Fließverbindung zwischen dem zweiten Flüssigkeitsraum 44 und dem ersten Flüssigkeitsraum 42 bzw. dessen zweitem Teilraum 48 herstellt. Sobald dies geschieht, wird durch die Kraft der Schließfeder 38 der Schließkolben 30 schnell nach unten gedrückt und der Stempel 32 drückt die Dichtung 34 wieder auf den Ventilsitz 22. Das Ventil ist geschlossen.

Der Steuerbolzen 66 ist in dem in den Figuren 1 und 2 gezeigten Ausführungsbeispiel längsverschieblich in der Kolbenstange 52 mittels einer Stellschraube 86 gehalten.

Die Darstellung der erfindungsgemäßen Ventilvorrichtung 10 in den Figuren 1 und 2 macht deutlich, daß mit einer geringen Anzahl von Dichtungen eine Abdichtung des Hydrauliksystems gegenüber dem Fluidsystem bzw. des Hydrauliksystems zur Umgebung hin erzielt werden kann. Diese geringe Zahl an Dichtungen ist deshalb erreichbar, weil das Hydrauliksystem 14 im geschlossenen Zustand der Ventilvorrichtung, die gleichzeitig die Normalstellung darstellt, drucklos ist, so daß beispielsweise auf eine Dichtungsmaßnahme zwischen Verschluß 40 und Gehäuse 18 vollständig verzichtet werden kann. Es reicht hier das plane Aufliegen des Verschlusses 40 auf dem oberen Ende der Wandung des Gehäuses 18. Die bei Betätigung des Ventils teilweise mit Druck beaufschlagten Flüssigkeitsräume 44 bzw. der zweite Teilraum 47 des ersten Flüssigkeitsraums 42 sind mittels einfachen O-Ringdichtungen gegenüber den angrenzenden Räumen bzw. der Umgebung abgedichtet.

Darüber hinaus wird aus den Figuren 1 und 2 deutlich, daß die Bauteile, die zur Verwendung der erfindungsgemäßen Ventilvorrichtung 10 verwendet werden, ausschließlich einfach herzustellende Drehteile sind und gleichzeitig ein relativ geringer Anteil von Drehteilen benötigt wird. So kann beispielsweise bei der einfachsten Ausführungsform der Erfindung auch auf eine Verschieblichkeit des Steuerbolzens 66 gegenüber dem Steuerkolben 50 verzichtet werden, so daß auch dieses Bauteil einstückig ausgeführt werden kann.

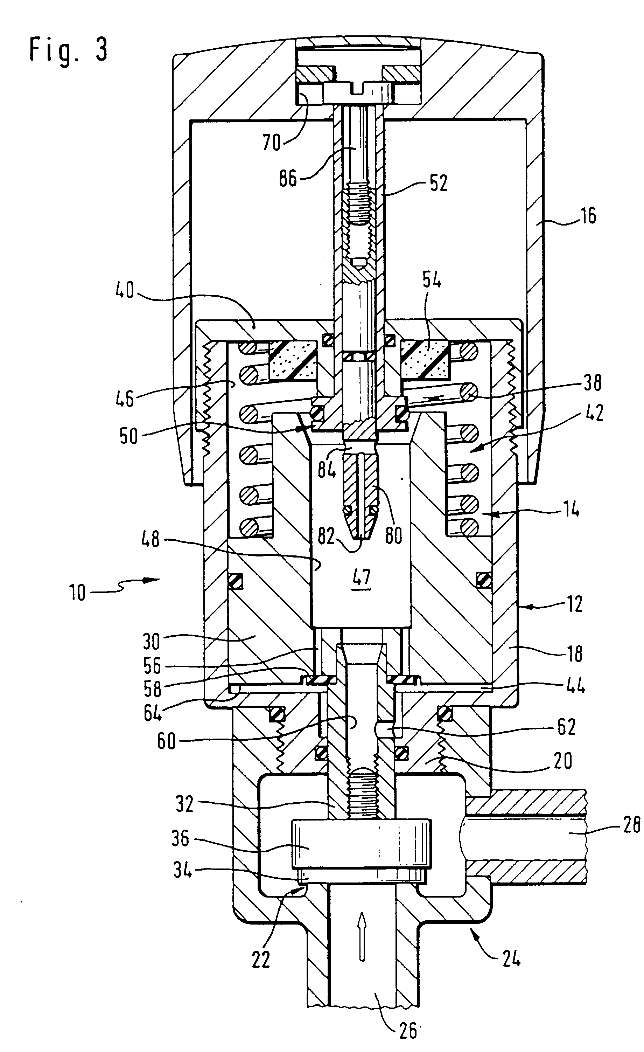

In den Figuren 3 bis 5 ist eine andere Variante der erfindungsgemäßen Ventilvorrichtung vorgestellt, die anstelle der Selbsthaltung eine Selbstschluß-Zeitfunktion beinhaltet. Da an der Ventilvorrichtung nur geringfügige Änderungen vorgenommen werden müssen, um diese Selbstschluß-Zeitfunktion zu realisieren, werden in den Figuren 3 bis 5 für identische Teile die identischen Bezugszeichen verwendet.

Für die Ausgangsstellung der Figur 3, bei der die Ventilvorrichtung 10 geschlossen ist, gilt alles, was zuvor bei der Beschreibung der Figur 1 näher erläutert wurde entsprechend. Der wesentliche Unterschied der in der Figur 3 dargestellten Ventilvorrichtung zu der in Figur 1 gezeigten liegt darin, daß ein Steuerbolzen 80 vorhanden ist, welcher im wesentlichen dieselbe Gestalt und dieselbe Funktion aufweisen kann, wie der in Figur 1 und 2 beschriebene Steuerbolzen 66. Der einzige wesentliche Unterschied des Steuerbolzens 80 gegenüber dem Steuerbolzen 66 der Figuren 1 und 2 besteht darin, daß dieser eine Drosselbohrung 82 aufweist, die Teil der zweiten Fließverbindung zwischen dem ersten und dem zweiten Flüssigkeitsraum 42, 44 darstellt, welche über die Drosselbohrung 82 nie vollkommen geschlossen ist. Auch hier könnte der Steuerbolzen 80 wieder einstückig mit dem Steuerkolben 50 ausgebildet sein und auf die Längenveränderbarkeit des Steuerbolzens 80, der über den Steuerkolben 50 hinaussteht, könnte verzichtet werden.

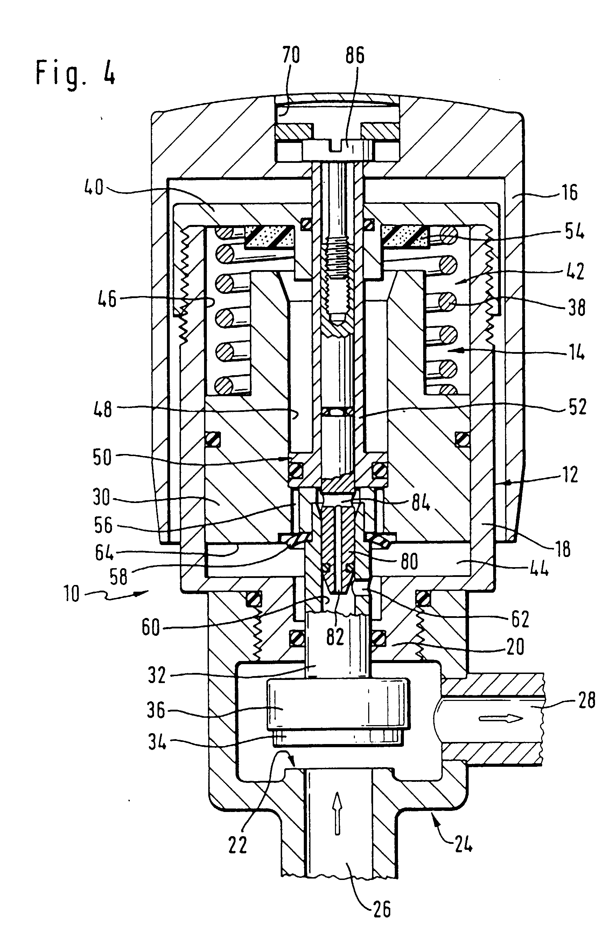

Beim Einführen des Steuerkolbens 50 und damit auch des Steuerbolzens 80 in das Gehäuse 18 der Ventilvorrichtung 10 rückt der Steuerbolzen 80 in die koaxiale Bohrung 60 ein (vgl. Figur 4), wobei jedoch in diesem Falle die zweite Fließverbindung zwischen dem ersten Flüssigkeitsraum 42 und dem zweiten Flüssigkeitsraum 44 nicht ganz geschlossen wird, sondern über die Drosselbohrung 82 und eine das obere Ende der Drosselbohrung 82 mit dem umgebenden ersten Flüssigkeitsraum verbindende Querbohrung 84 im Steuerbolzen 80 verbunden bleibt. Somit kann natürlich neben der ersten Fluidverbindung über die Kanäle 56 und das Rückschlagventil 58 beim Öffnen der Ventilvorrichtung 10 auch noch Hydraulikflüssigkeit über die zweite Fließverbindung bis zur Endstellung des Schließkolbens von dem ersten Flüssigkeitsraum 42 zum zweiten Flüssigkeitsraum 44 fließen.

Figur 4 zeigt die erfindungsgemäße Ventilvorrichtung 10 der Figur 3 in der Offenstellung, wobei über die Federkraft der Schließfeder 38 die Hydraulikflüssigkeit, die hier wie bei allen anderen erfindungsgemäßen Ventilvorrichtungen vorzugsweise ein Silikonöl ist, vom zweiten Flüssigkeitsraum 44 über die Querbohrung 62, die Drosselbohrung 82 und die Querbohrung 84 in den zweiten Teilraum 48 des ersten Flüssigkeitsraums 42 fließen kann. Dabei verschiebt sich der Steuerkolben 50 nach oben, während gleichzeitig der Schließkolben 30 eine nach unten gerichtete, also gegenläufige Bewegung ausführt und dabei den Stempel 32 mit der Dichtung 34 nach unten in Richtung zum Ventilsitz 22 bewegt. Der Schließvorgang bzw. das Annähern der Dichtung 34 an den Ventilsitz 22 geschieht zunächst relativ langsam, solange der Steuerbolzen 80 noch in der koaxialen Bohrung 60 eingerückt ist.

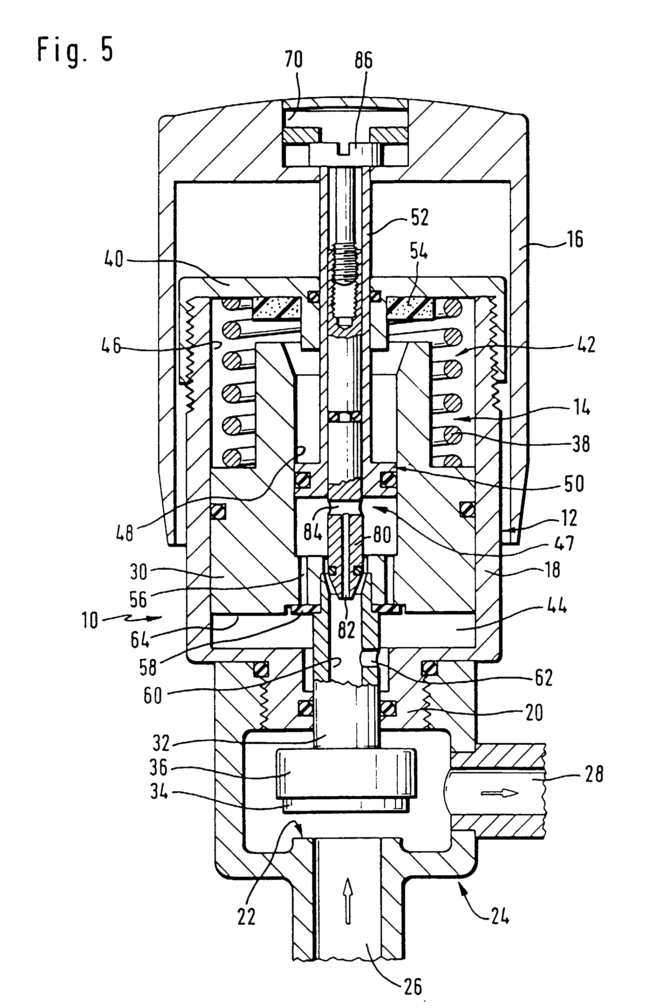

Sobald der Steuerbolzen 80 die Koaxialbohrung 60 verläßt (vgl. die Situation dargestellt in Figur 5), vergrößert sich der für das Fließen der Hydraulikflüssigkeit vom zweiten Flüssigkeitsraum 44 zum ersten Flüssigkeitsraum 42 zur Verfügung stehende Querschnitt schlagartig, so daß das Ventil zügig schließt.

Die Öffnungszeit des Ventils hängt neben der Viskosität der Hydraulikflüssigkeit (vorzugsweise Silikonöl) und dem Durchmesser der Drosselbohrung natürlich auch von der Länge der Drosselbohrung und von der Eintauchtiefe des Steuerbolzens 80 in die koaxiale Bohrung 60 des Schließkolbens bzw. dessen Stempel 32 ab. Diese Eintauchtiefe und damit die Öffnungszeit des Ventils kann stufenlos über eine Stellschraube 86 geschehen, die von der Handhabe 16 her in den gegenüber dem Steuerkolben 50 verschieblich gehaltenen Steuerbolzen 80 eingeschraubt ist.

Der Vorgang beim vorzeitigen Schließen des Selbstschluß-Zeitventiles läuft ähnlich ab wie bei dem im Zusammenhang mit der Figur 2 beschriebenen Schließvorgang, wobei jedoch hier beim Zurückziehen des Steuerkolbens 50 aus der Bohrung 48 und des Steuerbolzens 80 aus der Koaxialbohrung 60 ein geringerer Unterdruck erzeugt wird, da bereits während dem Herausziehen des Steuerkolbens 50 und dem damit fest verbundenen Steuerbolzen 80 ein geringer Teil Öl über die Drosselbohrung 82 bereits vom zweiten Flüssigkeitsraum 44 in den ersten Flüssigkeitsraum 42 zurückfließen kann.

Das Volumen, das durch die Drosselbohrung 82 strömen kann, ist jedoch nicht limitierend für das vorzeitige Schließen des Ventils, denn auch hier kann kurzzeitig ein Vakuum entstehen, das beim Austauchen des Steuerbolzens 80 aus der koaxialen Bohrung 60 wieder aufgehoben wird.

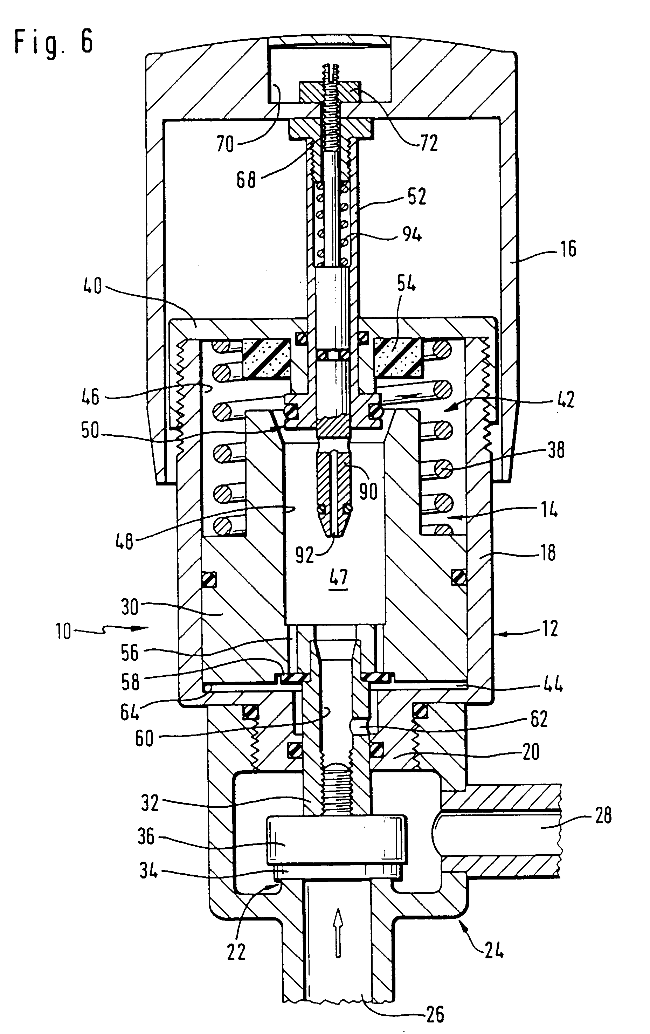

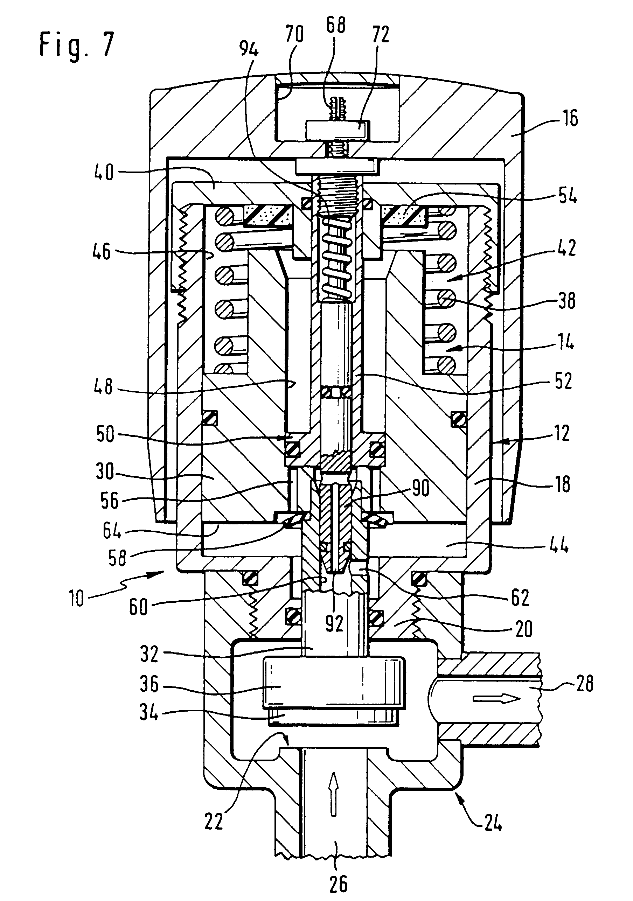

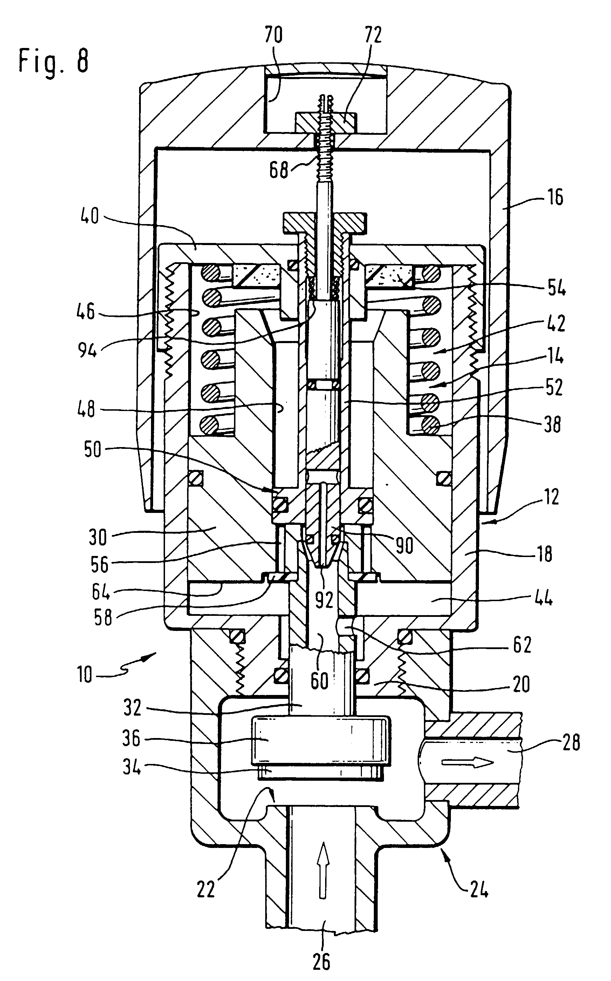

In den folgenden Figuren 6 bis 8 ist eine weitere Variante einer Ventilvorrichtung mit einer Selbstschluß-Zeitfunktion gezeigt, die sich gegenüber der in den Figuren 3 bis 5 gezeigten Ausführungsform lediglich in der Lagerung des Steuerbolzens 80 gegenüber dem Steuerkolben 50 unterscheidet.

Das Schraubgewinde 68 wird von einer Aufnahme 70 im Deckelteil 16 aufgenommen, in der es durch eine Kontermutter 72 gesichert ist. Über das Schraubgewinde 68 läßt sich die Stellung des Steuerbolzens 66 gegenüber dem Steuerkolben 50 verstellen und damit auch die benötigte Rückstellkraft zum Öffnen der Fließverbindung zwischen dem ersten und dem zweiten Flüssigkeitsraum 42, 44 bzw. der Rückstellkraft zum erneuten Schließen der Ventilvorrichtung 10. Gleichzeitig ist dies die Selbsthaltekraft, mit der die Ventilvorrichtung 10 in ihrer Offenstellung gehalten wird.

Während der Steuerbolzen 80 in der in den Figuren 3 bis 5 gezeigten Ausführungsform mit dem Steuerkolben 50 fest verbunden ist, so daß diese immer nur zusammen betätigt werden können, ist bei der Ausführungsform gemäß den Figuren 6 bis 8 vorgesehen, daß ein Steuerbolzen 90 mit einer Drosselbohrung 92 nicht nur gegenüber dem Steuerkolben 50 verstellbar ist, sondern mittels der Handhabe 16 auch unabhängig vom Steuerkolben 50 aus der Ventilvorrichtung 10 herausziehbar ist. In seiner Normalstellung (Figur 6) wird der Steuerbolzen durch eine Druckfeder 94 gehalten, welche in der Kolbenstange 52 untergebracht ist.

Dies hat insbesondere beim vorzeitigen Schließen des Selbstschluß-Zeitventils den Vorteil, daß nicht ein relativ großes Flüssigkeitsvolumen vom zweiten Flüssigkeitsraum zum ersten Flüssigkeitsraum transportiert werden muß, bevor das Ventil selbsttätig und zügig schließt, sondern hier kann das relativ kleine Volumen des Steuerbolzens schnell aus der koaxialen Bohrung 60 herausgezogen werden, wodurch sofort ein unbehindertes Rückfließen der Hydraulikflüssigkeit von dem zweiten Flüssigkeitsraum 44 über die Querbohrung 62, die koaxiale Bohrung 60 zum zweiten Teilraum 47 des ersten Flüssigkeitsraums 42 möglich ist. Der Steuerkolben 50 wird dadurch kurze Zeit nach dem Herausziehen des Steuerbolzens 90 aus der koaxialen Bohrung 60 nach oben aus der Bohrung 48 herausgedrückt, und die Trennung des ersten Flüssigkeitsraums 42 in zwei Teilräume 46, 47 ist damit aufgehoben. Diese Variante der verschieblichen Lagerung des Steuerbolzens gegenüber dem Steuerkolben läßt sich selbstverständlich auch bei den in den Figuren 1 und 2 gezeigten Ventilvorrichtungen mit einer selbsthaltenden Funktion in der Offenstellung realisieren, wobei hier wie dort der Steuerbolzen 90 durch eine Druckfeder 94 in der unteren, d.h. in seiner normalen wirksamen Position gehalten wird.

Bis auf den beschriebenen Unterschied baut sich die Ventilvorrichtung 10 der Figuren 6 bis 8 genauso auf wie die der Figuren 3 bis 5 bzw. der Figuren 1 und 2, und auch die Funktionen sind bis auf die beschriebenen Änderungen identisch mit den Vorgängen in den Ventilen gemäß den Figuren 1 bis 5.

Ein wesentlicher Vorteil der erfindungsgemäßen Ventilvorrichtung gegenüber den bisher bekannten liegt darin, daß das Zeitverhalten unabhängig vom Systemdruck des Wassers ist und des fluiden Mediums allgemein, die Zeitfunktion ist stufenlos einstellbar von einer Schließzeit von 5 sek bis ca. 2 min, wobei keine unterschiedlichen Bauteile bei der Konstruktion des Ventils verwendet werden müssen.

Ferner wird das Ventil nicht vom zu steuernden Medium durchflossen, das bedeutet, daß auch relativ schmutziges oder aggressives Medium, insbesondere Wasser, dem Ventil und der Funktionstüchtigkeit nicht schaden kann.

Mit dem erfindungsgemäßen Ventil läßt sich ein Ventilhub von mehr als 2 mm erreichen, was den Vorteil beinhaltet, daß auch grobe Partikel im Wasser oder im fluiden Medium nicht zwischen Sitz und Dichtung hängen bleiben können.

Ferner kann das Ventil sich variabel verschiedenen Ventilsitztiefen anpassen und funktioniert auch dann noch, wenn die Normtiefe (21,5 mm) um ± 2 mm abweicht. Der Öffnungshub bleibt dabei unbeeinflußt.

Ein besonderer Vorteil des erfindungsgemäßen Ventils liegt darin, daß es durch bereits leichtes Ziehen an der Handhabe 16 vorzeitig abstellbar bzw. zu schließen ist. Für das Ventil mit der Selbsthaltung in der Offenstellung gilt dies für das Schließen des Ventils ganz allgemein.

Bei geschlossenem Ventil ist im Ventilinneren kein Druck vorhanden, weshalb dadurch alle Dichtungsteile in dem weitaus größeren Zeitraum, d.h. im Normalzustand des geschlossenen Ventils, unbelastet sind.

Durch die Verwendung von relativ leicht herzustellenden Drehteilen sind die Herstellungskosten im Vergleich zu anderen Ventilen dieser Art gering. Die ausschließliche Verwendung von einfachen Drehteilen und die Verwendung von lediglich 6 Standard-O-Ringen und einer bzw. zwei Federn zeigt diesen Vorteil ganz besonders. Darüber hinaus ist auch die Montage des Ventils einfach, und bei der Serienherstellung läßt sich eine Montagezeit von weniger als 5 Minuten erreichen.

## Patentansprüche

1. Ventilvorrichtung (10) für fluide Medien mit einer Ventilaufnahme (12), welche eine mit einem Systemdruck beaufschlagten Fluidsystem in Fließverbindung stehende Einlaßseite (26), eine Auslaßseite (28) und einen Ventilsitz (22) umfaßt, und einem von einer Schließstellung in eine Offenstellung mittels eines vom Fluidsystem getrennten Hydrauliksystems (14) gegen die Krafteinwirkung einer Schließfeder (38) bewegbaren Schließkolben (30), welcher in der Offenstellung eine Fließverbindung von der Einlaß- (26) zur Auslaßseite (28) schafft, wobei das Hydrauliksystem (14) einen ersten und einen zweiten Flüssigkeitsraum (42, 44) umfaßt sowie einen Steuerkolben (50) zum Bewegen des Schließkolbens (30) in die Offenstellung unter Verdrängung von Hydraulikflüssigkeit aus dem ersten Flüssigkeitsraum (42) in den zweiten Flüssigkeitsraum (44) über eine ein Rückschlagventil (58) umfassende erste Fließverbindung (56) und wobei eine zur ersten Fließverbindung (56, 58) parallele zweite Fließverbindung (62, 60) vorhanden ist, in welche beim Bewegen des Schließkolbens in die Offenstellung ein Sperrglied (66; 80; 90) einrückbar ist, welches in der Offenstellung des Schließkolbens (30) einen ungehinderten Rückfluß der Hydraulikflüssigkeit vom zweiten zum ersten Flüssigkeitsraum (44; 42) verhindert und in der Schließstellung des Schließkolbens (30) einen ungehinderten Flüssigkeitsaustausch zwischen dem ersten und dem zweiten Flüssigkeitsraum (42; 44) zuläßt.

2. Ventilvorrichtung nach Anspruch 1, dadurch gekennzeichnet, daß der Schließkolben (30) und der Steuerkolben (50) koaxial angeordnet sind und beim Betätigen der Ventilvorrichtung (10) gegenläufige Bewegungen ausführen.

3. Ventilvorrichtung nach Anspruch 1 oder 2, dadurch gekennzeichnet, daß das Sperrglied (66; 80; 90) ein vom Steuerkolben betätigbarer Steuerbolzen ist und daß die zweite Fließverbindung (62, 60) eine zum Steuerbolzen (66; 80; 90) komplementäre Bohrung (60) umfaßt.

4. Ventilvorrichtung nach Anspruch 3, dadurch gekennzeichnet, daß der Steuerbolzen (66; 80; 90) am Steuerkolben (50) gehalten ist.

5. Ventilvorrichtung nach Anspruch 4, dadurch gekennzeichnet, daß die Bohrung (60) koaxial zum Steuerkolben (50) und zum Sperrglied (66; 80; 90) angeordnet ist.

6. Ventilvorrichtung nach Anspruch 5, dadurch gekennzeichnet, daß die Bohrung (60) in einem Stempel (32) angeordnet ist.

7. Ventilvorrichtung nach einem der Ansprüche 1 bis 6, dadurch gekennzeichnet, daß das Sperrglied (66) die zweite Fließverbindung (62, 60) im wesentlichen vollständig unterbricht.

8. Ventilvorrichtung nach einem der Ansprüche 1 bis 6, dadurch gekennzeichnet, daß das Sperrglied eine Drosselbohrung (82; 92) umfaßt.

9. Ventilvorrichtung nach einem der Ansprüche 1 bis 8, dadurch gekennzeichnet, daß das Sperrglied (66; 80; 90) unabhängig von der Bewegung des Steuerkolbens (50) aus der zweiten Fließverbindung (62, 60) ausrückbar ist.

10. Ventilvorrichtung nach einem der Ansprüche 2 bis 9, dadurch gekennzeichnet, daß der Schließkolben (30) eine an den Durchmesser des Steuerkolbens (50) angepaßte und mit diesem koaxiale Bohrung (48) umfaßt, in welche der Steuerkolben (50) bei einer Betätigung der Ventilvorrichtung (10) eintaucht.

11. Ventilvorrichtung nach Anspruch 10, dadurch gekennzeichnet, daß der Steuerkolben (50) beim Eintauchen in die koaxiale Bohrung (48) des Schließkolbens (30) an dieser dichtend anliegt und dadurch den ersten Flüssigkeitsraum (42) in zwei Teilräume (46; 47) unterteilt, wobei der zweite Teilraum (47) mit dem zweiten Flüssigkeitsraum (44) über die erste und gegebenenfalls die zweite Fließverbindung (56; 62, 60) verbunden ist.

12. Ventilvorrichtung nach einem der Ansprüche 1 bis 11, dadurch gekennzeichnet, daß das Hydrauliksystem (14) im Schließzustand des Schließkolbens (30) im wesentlichen drucklos ist.

13. Ventilvorrichtung nach Anspruch 1 bis 12, dadurch gekennzeichnet, daß das Hydrauliksystem (14) ein geschlossenes System ist und ein Volumenausgleichsteil (54) umfaßt, welches die von dem Steuerkolben (50) und dem Steuerbolzen (66; 80; 90) in das Hydrauliksystem eindringende Volumenelemente ausgleicht.

14. Ventilvorrichtung nach Anspruch 13, dadurch gekennzeichnet, daß das Volumenausgleichselement (54) ein geschlossenporiger Polymerschaum ist.

## Claims

1. Valve device (10) for fluid media having a valve receptacle (12) which comprises an inlet side (26) which is in flow connection with a fluid system exposed to a system pressure, an outlet side (28) and a valve seat (22), and having a closure piston (30) which can be moved from a closed position to an open position by means of a hydraulic system (14) separated from the fluid system against the force action of a closing spring (38) and which creates in the open position a flow connection from the inlet side (26) to the outlet side (28), wherein the hydraulic system (14) comprises a first and a second liquid space (42, 44) and also an actuating piston (50) for moving the closure piston (30) into the open position while displacing hydraulic liquid from the first liquid space (42) into the second liquid space (44) via a first flow connection (56) comprising a non-return valve (58) and wherein a second flow connection (62, 60) is present which is parallel to the first flow connection (56, 58) and into which a barrier member (66; 80; 90) can be inserted when the closure piston is moved into the open position, which barrier member prevents, in the open position of the closure piston (30), an unimpeded backflow of the hydraulic liquid from the second to the first liquid space (44; 42) and, in the closed position of the closure piston (30), permits an unimpeded liquid exchange between the first and the second liquid space (42; 44).

2. Valve device according to Claim 1, characterized in that the closure piston (30) and the actuating piston (50) are coaxially disposed and perform opposing movements when the valve device (10) is actuated.

3. Valve device according to Claim 1 or 2, characterized in that the barrier member (66; 80; 90) is an actuating pin which can be actuated by the actuating piston and in that the second flow connection (62, 60) comprises a bore (60) which matches the actuating pin (66; 80; 90).

4. Valve device according to Claim 3, characterized in that the actuating pin (66; 80; 90) is supported on the actuating piston (50).

5. Valve device according to Claim 4, characterized in that the bore (60) is disposed coaxially with respect to the actuating piston (50) and to the barrier member (66; 80; 90).

6. Valve device according to Claim 5, characterized in that the bore (60) is disposed in a plunger (32).

7. Valve device according to one of Claims 1 to 6, characterized in that the barrier member (66) essentially completely interrupts the second flow connection (62, 60).

8. Valve device according to one of Claims 1 to 6, characterized in that the barrier member comprises a throttle bore (82; 92).

9. Valve device according to one of Claims 1 to 8, characterized in that the barrier member (66; 80; 90) can be removed from the second flow connection (62, 60) independently of the movement of the actuating piston (50).

10. Valve device according to one of Claims 2 to 9, characterized in that the closure piston (30) comprises a bore (48) which is matched to the diameter of the actuating piston (50) and is coaxial with the latter and into which the actuating piston (50) is inserted when the valve device (10) is actuated.

11. Valve device according to Claim 10, characterized in that, when the closure piston (30) is inserted into the coaxial bore (48), the actuating piston (50) is adjacent to the closure piston (30) so as to form a seal and thereby subdivides the first liquid space (42) into two subspaces (46; 47), wherein the second subspace (47) is connected to the second liquid space (44) via the first and, optionally, the second flow connection (56; 62, 60).

12. Valve device according to one of Claims 1 to 11, characterized in that the hydraulic system (14) is essentially at atmospheric pressure in the closed state of the closure piston (30).

13. Valve device according to Claims 1 to 12, characterized in that the hydraulic system (14) is a closed system and comprises a volume equalization part (54) which equalizes the volume elements penetrating the hydraulic system from the actuating piston (50) and the actuating pin (66; 80; 90).

14. Valve device according to Claim 13, characterized in that the volume equalization element (54) is a closed-pore polymer foam.

## Revendications

1. Soupape (10) pour fluides comportant un logement (12) de soupape qui comprend un côté d'admission (26) en liaison d'écoulement avec un système fluidique alimenté par une pression de système, un côté d'écoulement (28) et un siège de soupape (22), et comportant un piston de fermeture (30) déplaçable depuis une position de fermeture dans une position d'ouverture au moyen d'un système hydraulique (14) séparé du système fluidique à l'encontre de l'effet de la force d'un ressort de fermeture (38), ledit piston réalisant dans la position d'ouverture une liaison d'écoulement depuis le côté d'admission (26) vers le côté d'écoulement (28), le système hydraulique (14) comprenant une première et une seconde chambre de liquide (42, 44) ainsi qu'un piston de commande (50) destiné à déplacer le piston de fermeture (30) dans la position d'ouverture en refoulant du liquide hydraulique depuis la première chambre de liquide (42) dans la seconde chambre de liquide (44) par l'intermédiaire d'une première liaison d'écoulement (56) comprenant une soupape de retenue (58), et parallèlement à la première liaison d'écoulement (56, 58) se trouve une seconde liaison d'écoulement (62, 60) dans laquelle, lorsque le piston de fermeture est déplacé dans la position d'ouverture, un organe de blocage (66 ; 80 ; 90) est susceptible d'être engagé, celui-ci empêchant un reflux libre du liquide hydraulique depuis la seconde chambre de liquide vers la première (44 ; 42) et permettant dans la position de fermeture du piston de fermeture (30) un échange libre de liquide entre la première et la seconde chambres de liquide (42 ; 44).

2. Soupape selon la revendication 1, caractérisée en ce que le piston de fermeture (30) et le piston de commande (50) sont agencés de manière coaxiale et exécutent des mouvements opposés lors de l'actionnement de la soupape (10).

3. Soupape selon l'une ou l'autre des revendications 1 et 2, caractérisée en ce que l'organe de blocage (66 ; 80 ; 90) est un boulon de commande susceptible d'être actionné par le piston de commande et en ce que la seconde liaison d'écoulement (62, 60) comprend un orifice (60) complémentaire au boulon de commande (66 ; 80 90).

4. Soupape selon la revendication 3, caractérisée en ce que le boulon de commande (66 ; 80 ; 90) est maintenu contre le piston de commande (50).

5. Soupape selon la revendication 4, caractérisée en ce que l'orifice (60) est agencé de manière coaxiale par rapport au piston de commande (50) et à l'organe de blocage (66 ; 80 90).

6. Soupape selon la revendication 5, caractérisée en ce que l'orifice (60) est agencé dans un poussoir (32).

7. Soupape selon l'une quelconque des revendications 1 à 6, caractérisée en ce que l'organe de blocage (66) interrompt la seconde liaison d'écoulement (62, 60) de manière sensiblement totale.

8. Soupape selon l'une quelconque des revendications 1 à 6, caractérisée en ce que l'organe de blocage comprend un orifice d'étranglement (82 ; 92).

9. Soupape selon l'une quelconque des revendications 1 à 8, caractérisée en ce que l'organe de blocage (66 ; 80 ; 90) est susceptible d'être dégagé hors de la seconde liaison d'écoulement (62, 60) indépendamment du mouvement du piston de commande (50).

10. Soupape selon l'une quelconque des revendications 2 à 9, caractérisée en ce que le piston de fermeture (30) comprend un orifice (48) adapté au diamètre du piston de commande (50) et coaxial à celui-ci, dans lequel le piston de commande (50) plonge lors d'un actionnement de la soupape (10).

11. Soupape selon la revendication 10, caractérisée en ce que lorsque le piston de commande (50) plonge dans l'orifice (48) coaxial du piston de fermeture (30), il repose de manière étanche sur celui-ci et divise grâce à cela la première chambre de liquide (42) en deux chambres partielles (46 ; 47), la seconde chambre partielle (47) étant reliée à la seconde chambre de liquide (44) par l'intermédiaire de la première et éventuellement de la seconde liaison d'écoulement (56 ; 62, 60).

12. Soupape selon l'une quelconque des revendications 1 à 11, caractérisée en ce que le système hydraulique (14) est sensiblement sans pression à l'état fermé du piston de fermeture (30).

13. Soupape selon les revendications 1 à 12, caractérisée en ce que le système hydraulique (14) est un système fermé et comprend un élément de compensation de volume (54) qui compense les éléments de volume pénétrant dans le système hydraulique au moyen du piston de commande (50) et du boulon de commande (66 ; 80 90).

14. Soupape selon la revendication 13, caractérisé en ce que l'élément de compensation de volume (54) est une mousse polymère à pores fermés.
